# EUROPÄISCHE PATENTSCHRIFT

(11) **EP 2 086 743 B1**
(45) Veröffentlichungstag und Bekanntmachung des Hinweises auf die Patenterteilung: **22.12.2010**
(21) Anmeldenummer: 07819193.9
(22) Anmeldetag: 22.10.2007
(51) Int. Cl.: B29C 47/68

(54) **VORRICHTUNG ZUM GESTEUERTEN LEITEN EINER KUNSTSTOFFSCHMELZE**
DEVICE FOR THE CONTROLLED GUIDANCE OF A POLYMER MELT
DISPOSITIF DE GUIDAGE COMMANDE D'UNE MATIERE PLASTIQUE FONDUE

(30) Priorität: 24.10.2006 DE 102006050683
(43) Veröffentlichungstag der Anmeldung: 12.08.2009
(73) Patentinhaber: Gneuss Kunststofftechnik GmbH, 32549 Bad Oeynhausen (DE)
(72) Erfinder: GNEUSS, Detlef, 32545 Bad Oeynhausen (DE)
(74) Vertreter: Grosse, Wolf-Dietrich Rüdiger
(86) Internationale Anmeldenummer: PCT/EP2007/009129
(87) Internationale Veröffentlichungsnummer: WO 2008/049559

(56) Entgegenhaltungen:
- EP-A- 0 399 086
- DE-A1- 10 056 557
- DE-C1- 3 840 904

## Beschreibung

Die Erfindung betrifft eine Vorrichtung zum gesteuerten Leiten einer Kunststoffschmelze mit einem mit einem Einlaufkanal sowie einem Auslaufkanal für die Kunststoffschmelze ausgestatteten Gehäuse, in dem zwischen den Mündungen des Einlaufkanals sowie des Auslaufkanals ein Steuerglied abgedichtet quer zu dem Einlaufkanal sowie dem Auslaufkanal bewegbar ist, wobei als Steuerglied ein drehbarer Bolzen vorgesehen ist der einen Durchflusskanal für die Kunststoffschmelze aufweist und der über einen Dreharm aus einer ersten in eine zweite Position drehbar ist.

Es sind Siebwechsler bekannt, die durch axiales Verschieben eines Bolzens bzw. einer Platte in einem Gehäuse in und außer Wirkstellung gebracht werden können. In der EP 1 044 094 B1 ist beispielsweise eine Siebwechselvorrichtung beschrieben, bei der in einem Schieber als Siebträger zwei Filterplatten angeordnet sind. Sobald das Sieb aus dem Gehäuse ausgetreten ist, kann es gewechselt werden. Nachteilig ist dabei, dass großer Kraftaufwand benötigt wird, um die axiale Verschiebung des Siebträgerbolzens bzw. die seitliche Verschiebung des Schiebers zu erreichen. Ein Siebwechsel erfolgt bei derartigen Siebwechselvorrichtungen selten, d.h. in größeren Zeitabständen von einigen Tage bis zu einer Woche, wodurch der Siebträger oft im Gehäuse verkrustet, so dass er nur schlecht und schwergängig bewegt werden kann.

Aus der EP 1 167 844 A2 ist ein totraumfreies Mehrwege-Ventil zur Verteilung und/oder Aufteilung von mindestens einem Zulauf zugeführter Kunststoffschmelze während ihrer Herstellung und Verarbeitung, bei dem während jedes Betriebszustands alle Innenkammern des Ventils und der Schmelze durchströmt werden. Ein derartiger Aufbau ist aber sehr aufwändig.

Die Gattungsbildende DE 102 34 228 A1 offenbart ein Anfahrventil für einen Extruder mit einem im Ventilbolzen zentrisch angeordneten Doppelkanal. Im normalen Betrieb ist hier jedoch die Überdeckung zwischen Ventilbolzen einerseits und Gehäuse andererseits im Bereich des Anfahrkanals so gering, dass es stets zu Lecktagen kommt. Eine sichere Abdichtung ist hier nicht gewährleistet. Hinzu kommt, dass durch die zentrische Anordnung der Bohrung im Bolzen vom Bolzen selbst und auch vom Gehäuse viel Material verbleibt, welches im Betrieb aufgeheizt werden muss, damit das Anfahrventil zuverlässig arbeitet. Das Anfahrventil ist in seiner Erstellung sehr materialaufwendig und nur sehr energieaufwendig zu betreiben.

Durch die DE 28 44 246 A1 ist eine Siebwechselvorrichtung für Strangpressen bekannt geworden, die ebenfalls mit Drehbolzen arbeitet, die zentrische Bohrungen aufweisen deren Durchmesser denen der zuführenden Abführkanäle entspricht und in der Siebpakete über Siebstützplatten angeordnet sind. Durch Drehen des Drehbolzens um 90° lassen sich die Siebpakete durch eine Verschließbare Öffnung entnehmen. Auch hier ist die Überdeckung zwischen Drehbolzen und Gehäuse im Bereich der Entnahmeöffnung nur äußerst gering, so dass es im Filterbetrieb stets zu Lecktagen kommt, die jedoch von einer Klappe aufgefangen werden können. Auch hier muss sehr viel Material aufgeheizt werden, womit erhebliche Energiekosten verbunden sind.

In der DE 100 56 557 A1 ist ein Rückspülvorsatzgerät für eine Filtereinrichtung mit einem Gehäuse, das an eine Eintrittsbohrung anschließende Leitkanäle sowie Rückspülkanäle aufweist, und mit mindestens einem Drehkolben, der in einer Durchflussstellung den Durchfluss im jeweiligen Leitkanal freigibt und in einer Sperrstellung den Durchfluss im Leitkanal von der Eintrittsbohrung zur Filtereinrichtung unterbricht und eine Verbindung eines Abschnitts des jeweiligen Leitkanals mit einem zugehörigen zur Gehäuseaußenseite führenden Rückspülkanal herstellt. Der Drehkolben weist einen exzentrisch angeordneten Durchflusskanal mit einem konstanten Querschnitt auf, der dem Querschnitt des Leitkanals entspricht, wobei die Drehachse des Drehkolbens entsprechend exzentrisch bezüglich der Achse des Leitkanals verläuft und wobei der Durchflusskanal in der Durchflussstellung des Drehkolbens einen Teil des Leitkanals bildet, in der Sperrstellung jedoch die Verbindung zum Rückspülkanal herstellt.

Aus der DE 38 40 904 C1 ist bekannt, durch die Anordnung zweier paralleler Spülkanäle sowie eines Abfuhrkanal sicherzustellen, dass während des Betriebes des Siebbolzens innerhalb des einen Spülkanals kein Kunststoff im Siebbolzen unbewegt steht und damit verkracken oder sich zersetzen kann, dass andererseits dieser Spülkanal leicht mit einem Teilkanal zu verbinden ist und damit eine Rückführung von Kunststoff auf die Reinsiebseite des jeweiligen Siebes ermöglicht.

Die EP 0 399 086 A1 betrifft eine Filtervorrichtung zum Reinigen von Kunststoffschmelzen in einer Extrusionsanlage mit einem Filtergehäuse, das einen Strömungskanal mit einer Eintritts- und einer Austrittsöffnung für die Schmelze sowie einen schwenkbar gelagerten Filterträger mit einem Filterelement umfasst. Im Strömungskanal sind ein zylindrischer Filterträger mit einer quer zu seiner Drehachse gerichteten, das Filterelement aufnehmenden Durchtrittsöffnung, und in Strömungsrichtung dahinter ein wahlweise einstellbares Umlenkelement für mindestens zwei Abströmrichtungen des Schmelzestromes angeordnet.

Die Erfindung geht von der Aufgabe aus, eine Vorrichtung der eingangs genannten Art derart auszubilden, dass sie möglichst klein bauend und kostengünstig ist. Auch sollen mit wenigen unterschiedlichen Bauteilen verschiedene Funktionen durchführbar sein.

Die Aufgabe wird erfindungsgemäß dadurch gelöst, dass der Durchflusskanal exzentrisch im drehbaren Bolzen angeordnet ist, und dass der Bolzen ein Ventilbolzen eines Ablassventils ist, der eine Sackbohrung senkrecht zum Durchflusskanal aufweist, in deren Seite ein Abflusskanal schräg nach unten bis in die Mitte der Unterseite des Bolzens zum Auslass reicht.

Dabei verringert die exzentrische Anordnung des Durchflusskanals den Materialaufwand und die Heizkosten und gewährleistet, dass genügend Platz für die Sackbohrung und den Abflusskanal im Bolzen zur Verfügung stehen.

Außerdem ist zu erkennen, dass sich mit wenigen unterschiedlichen Bauteilen verschiedene Funktionen, hier ein Anfahrventil, das mit wenigen Änderungen in eine Siebwechselvorrichtung gewandelt werden kann, verwirklichen lassen.

Eine einfache Befestigung eines Antriebes des drehbaren Bolzens kann erreicht werden, wenn an dem Gehäuse eine Halterung für eine Antriebsvorrichtung angebracht ist.

In vorteilhafter Weise kann die Antriebsvorrichtung einen Betätigungshebel aufweisen, der an dem Ende des Dreharms drehbeweglich verbunden ist, wobei der Betätigungshebel durch einen schwenkbar an der Halterung befestigten Kolbenantrieb antreibbar ist.

Um die Schmelze flüssig zu halten, kann das Gehäuse mit Heizpatronen versehen sein.

Damit die Dichtungen des Kolbenantriebs nicht belastet wird und Wärmeenergie verloren geht, können erfindungsgemäß der drehbare Bolzen, der Dreharm und/oder der Betätigungshebel thermisch entkoppelt sein.

Dabei können der Dreharm und/oder der Betätigungshebel aus einem thermisch isolierenden Material oder aus einem Material mit geringer Wärmeleitung bestehen.

Von Vorteil ist, dass der Dreharm lösbar mit dem Bolzen verbunden ist, und dass der Bolzen nach einem Lösen vom Dreharm z.B. zu Wartungs- bzw. Austauschzwecken axial aus dem Gehäuse demontierbar ist. Dabei braucht das Gehäuse selbst nicht demontiert zu werden.

Die Erfindung ist nachfolgend anhand von in der Zeichnung dargestellten Ausführungsbeispielen näher erläutert. Es zeigen:
Fig. 1 eine Seitenansicht eines erfindungsgemäßen Ventilbolzens eines Ablassventils,
Fig. 2 eine Aufsicht des Ablassventils mit dem Ventilbolzen gemäß Figur 1,
Fig. 3 eine perspektivische Ansicht des Ablassventils gemäß Figur 2,

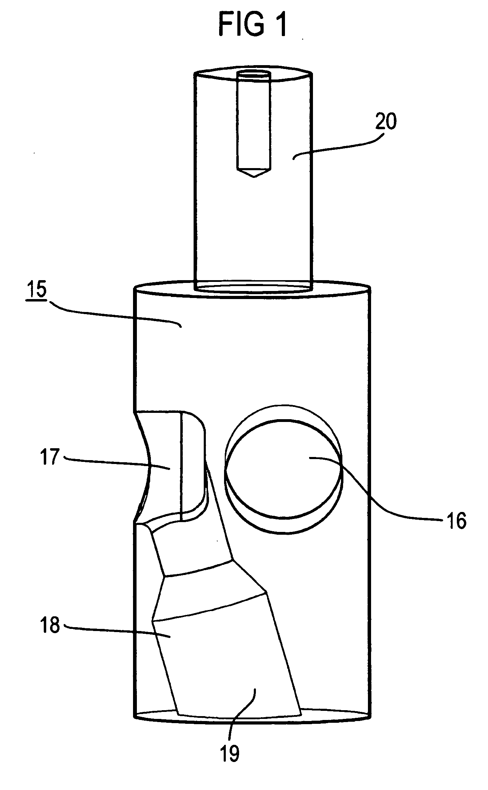

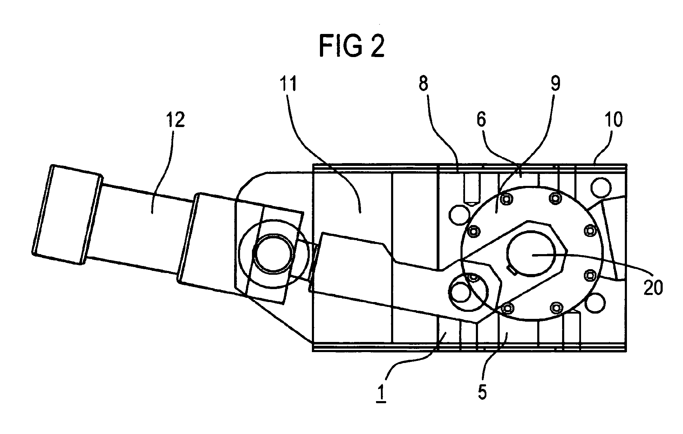

In der Figur 1 ist ein Ventilbolzen 15 für ein Ablassventil dargestellt. Dieser weist eine asymmetrische, parallel zum Durchmesser seitlich versetzte Bohrung als ein Durchflusskanal 16 auf. Auf der anderen Seite des Ventilbolzens 15 ist eine Sackbohrung 17 senkrecht zum Durchflusskanal 16 eingebracht, die aber nicht bis zum Durchflusskanal 16 durchgeht. In der Seite der Sackbohrung 17 ist ein schräg nach unten führender Abflusskanal 18 angeordnet, der bis in die Mitte der Unterseite des Ventilbolzens 15 reicht, bei der der Auslass 19 angeordnet ist. An der Oberseite des Ventilbolzens 15 ist ein Zapfen 20 zur Aufnahme und Befestigung eines Dreharms 9 vorgesehen, mittels dessen sich der Ventilbolzen 15 in einem Gehäuse 1 drehen lässt was nachfolgend anhand der Figur 2 näher erläutert ist.

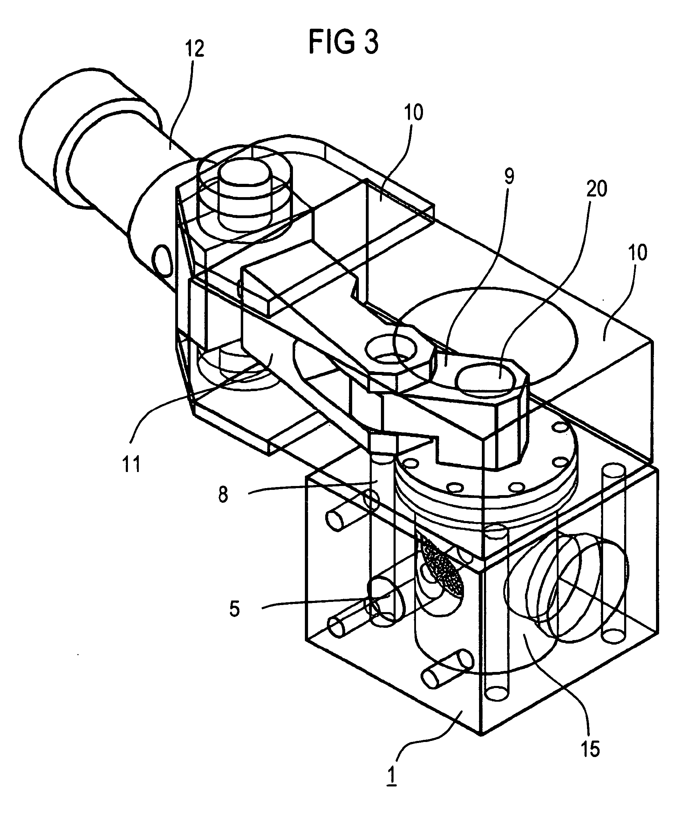

Die Figur 2 zeigt eine Aufsicht auf das Ablassventil mit dem erfindungsgemäßen Ventilbolzen 15 gemäß Figur 1 mit einem Gehäuse 1 und einer Antriebsvorrichtung 12 für das Ablassventil, in dem der Ventilbolzen 15 senkrecht drehbar angeordnet ist. In dem Gehäuse 1 sind ein Einlaufkanal 5 und diesem gegenüber ein Auslaufkanal 6 angeordnet, wie dies auch der Figur 3 zu entnehmen ist, in der das Ablassventil perspektivische dargestellt ist. In dem Gehäuse 1 sind Heizpatronen 8 vorgesehen, mittels derer durch Zuführung von Wärme die Kunststoffschmelze flüssig gehalten werden kann.

Auf dem Zapfen 20 des Ventilbolzens 15 ist ein Dreharm 9 zur Betätigung desselben aufgesteckt und befestigt. An dem Gehäuse 1 ist eine Halterung 10 angebracht, die eine schwenkbar befestigte Antriebsvorrichtung 12 z.B. eine Kolbenzylindereinheit trägt, über welche ein Betätigungshebel 11 antreibbar ist. Der Betätigungshebel 11 ist an dem Ende des Dreharms 9 drehbeweglich angebracht, so dass der Ventilbolzen 15 aus seiner Arbeits- oder Wirkstellung in seine Ablassstellung gedreht werden kann.

In der Durchlassstellung des Ablassventils befindet sich der Durchflusskanal 16 in einer Flucht mit dem Einlauf- 5 und dem Auslaufkanal 6, so dass die Kunststoffschmelze ungehindert durchfließen kann. In der zweiten Position, der Ablassstellung wird der Bolzen 15 um 90° gedreht, so dass sich die Sackbohrung 17 vor dem Einlaufkanal 5 befindet. Dadurch wird die Kunststoffschmelze abgelenkt und gelangt über den Abflusskanal 18 und durch den Auslass 19 beispielsweise als Ausschuss in einen Auffangbehälter. Es kann aber auch ein zweites Werkzeug angeschlossen sein, so dass das Ventil als normales Zweiwegeventil fungiert.

Das Ablassventil wird durch die Heizpatronen 8 geheizt, um die Kunststoffschmelze flüssig zu halten. Da durch den sehr kompakten Aufbau des Ablassventils große Mengen an Wärmeenergie über den Dreharm 9 und den Betätigungshebel 11 auf die Antriebsvorrichtung 12 übergehen könnte, so dass die Dichtungen der Antriebsvorrichtung 12 sehr belastet würden und außerdem viel Wärmeenergie verloren gehen würde, ist erfindungsgemäß eine thermische Entkopplung zwischen Ablassventil und deren Antriebsvorrichtung 12 vorgesehen. Der Dreharm 9 und/oder der Betätigungshebel 11 können aus einem thermisch isolierenden Stoff bestehen oder derart gestaltet sein, dass nur eine geringe Wärmeleitung stattfindet.

Das Ablassventil wird benötigt, um beim Anfahren von Stranggießmaschinen oder Extrudern das noch nicht richtig erwärmte "Ausschussmaterial" abzuleiten. Erst wenn das Material mit gewünschter Konsistenz und Beschaffenheit ansteht, wird das Ablassventil durch Drehung des Bolzens 15 um 90° auf Durchlass umgeschaltet.

### Bezugszeichenliste

- 1.: Gehäuse
- 5.: Einlaufkanal
- 6.: Auslaufkanal
- 8.: Heizpatronen
- 9.: Dreharm
- 10.: Halterung
- 11.: Betätigungshebel
- 12.: Antriebsvorrichtung
- 15.: Bolzen
- 16.: Durchflusskanal
- 17.: Sackbohrung
- 18.: Abflusskanal
- 19.: Auslass
- 20.: Zapfen

## Patentansprüche

1. Vorrichtung zum gesteuerten Leiten einer Kunststoffschmelze mit einem mit einem Einlaufkanal (5) sowie einem Auslaufkanal (6) für die Kunststoffschmelze ausgestatteten Gehäuse (1), in dem zwischen den Mündungen des Einlaufkanals (5) sowie des Auslaufkanals (6) ein Steuerglied abgedichtet quer zu dem Einlaufkanal (5) sowie dem Auslaufkanal (6) bewegbar ist, wobei als Steuerglied ein drehbarer Bolzen (15) vorgesehen ist der einen Durchflusskanal (16) für die Kunststoffschmelze aufweist und der über einen Dreharm (9) aus einer ersten in eine zweite Position drehbar ist,
**dadurch gekennzeichnet,**
**dass** der Durchflusskanal (16) exzentrisch im drehbaren Bolzen (15) angeordnet ist, und dass der Bolzen (15) ein Ventilbolzen eines Ablassventils ist, der eine Sackbohrung (17) senkrecht zum Durchflusskanal (16) aufweist, in deren Seite ein Abflusskanal (18) schräg nach unten bis in die Mitte der Unterseite des Bolzens (15) zum Auslass (19) reicht.

2. Vorrichtung nach Anspruch 1,
**dadurch gekennzeichnet,**
**dass** an dem Gehäuse (1) eine Halterung (10) für eine Antriebsvorrichtung (12) angebracht ist.

3. Vorrichtung nach Anspruch 2,
**dadurch gekennzeichnet,**
**dass** die Antriebsvorrichtung (12) schwenkbar an der Halterung (10) befestigt ist und einen ihr zugeordneten Betätigungshebel (11) antreibt, der an dem Ende des Dreharms (9) drehbeweglich verbunden ist.

4. Vorrichtung nach einem der Ansprüche 2 oder 3,
**dadurch gekennzeichnet,**
**dass** das Gehäuse (1) mit Heizpatronen (8) versehen ist.

5. Vorrichtung nach Anspruch 3,
**dadurch gekennzeichnet,**
**dass** der drehbare Bolzen (15), der Dreharm (9) und/oder der Betätigungshebel (11) thermisch entkoppelt sind.

6. Vorrichtung nach einem der Ansprüche 3 oder 5,
**dadurch gekennzeichnet,**
**dass** der Dreharm (9) und/oder der Betätigungshebel (11) aus einem thermisch isolierenden Material bestehen.

7. Vorrichtung nach einem der Ansprüche 3 oder 5 oder 6,
**dadurch gekennzeichnet,**
**dass** der Dreharm (9) und/oder der Betätigungshebel (11) aus einem Material mit geringer Wärmeleitung bestehen.

8. Vorrichtung nach einem der Ansprüche 1 bis 7,
**dadurch gekennzeichnet,**
**dass** der Dreharm (9) lösbar mit dem Bolzen (2, 15) verbunden ist, und dass der Bolzen (2, 15) nach einem Lösen vom Dreharm (9) zu Wartungs- bzw. Austauschzwecken axial aus dem Gehäuse (1) demontierbar ist.

## Claims

1. A device for the controlled guidance of a plastic melt with a housing (1) provided with an inlet channel (5) and an outlet channel (6) for the plastic melt, in which housing a control element can be displaced between the mouths of the inlet channel (5) and the outlet channel (6) in a sealing manner normal to the inlet channel (5) and the outlet channel (6), wherein a rotatable bolt (15) is provided as the control element, said rotatable bolt comprising a flow channel (16) for the plastic melt and being able to be rotated from a first to a second position by means of a rotary arm (9),
**characterised in that**
the flow channel (16) is arranged eccentrically in the rotatable bolt (15), and the bolt (15) is a valve bolt of a discharge valve, which comprises a blind hole (17) normal to the flow channel (16), into the side whereof a discharge channel (18) extends obliquely downwards up to the centre of the underside of the bolt (15) for the discharge (19).

2. The device according to claim 1,
**characterised in that**
a holding fixture (10) for a drive device (12) is fitted to the housing (1).

3. The device according to claim 2,
**characterised in that**
the drive device (12) is fixed in a swivelling manner to the holding fixture (10) and drives an operating lever (11) assigned to it, said operating lever being connected in a rotary manner to the end of the rotary arm (9).

4. The device according to any one of claims 2 or 3,
**characterised in that**
the housing (1) is provided with heating cartridges (8).

5. The device according to claim 3,
**characterised in that**
the rotatable bolt (15), the rotary arm (9) and/or the operating lever (11) are thermally decoupled.

6. The device according to any one of claims 3 or 5,
**characterised in that**
the rotary arm (9) and/or the operating lever (11) are made from a heat-insulating material.

7. The device according to any one of claims 3 or 5 or 6,
**characterised in that**
the rotary arm (9) and/or the operating lever (11) are made from a material with low thermal conductivity.

8. The device according to any one of claims 1 to 7,
**characterised in that**
the rotary arm (9) is connected detachably to the bolt (2, 15), and after release of the rotary arm (9) the bolt (2, 15) can be dismantled axially from the housing (1) for maintenance or replacement purposes.

## Revendications

1. Dispositif pour la conduite commandée d'une fonte de plastique comprenant un logement (1) muni d'un canal d'entrée (5) et d'un canal de sortie (6) pour la fonte de plastique, dans lequel entre les embouchures du canal d'entrée (5) et du canal de sortie (6), un membre de commande est mobile transversalement étanchéifié au canal d'entrée (5) et au canal de sortie (6) , sachant que comme membre de commande, un boulon rotatif (15) est prévu qui présente un canal de traversée (16) pour la fonte de plastique et qui est rotatif par un bras rotatif (9) d'une première position à une deuxième,
**caractérisé en ce que**
le canal de traversée (16) est placé de manière excentrée dans le boulon rotatif (15) et que le boulon (15) est un boulon de soupape d'une soupape de décharge qui présente un trou borgne (17) perpendiculairement au canal de traversée (16) dans le côté duquel un canal d'écoulement de sortie (18) part en biais vers le bas jusqu'au milieu de la sous-face du boulon (15) en direction de la sortie (19).

2. Dispositif selon la revendication 1,
**caractérisé en ce que**
sur le boîtier (1), une fixation (10) pour un dispositif d'entraînement (12) est placée.

3. Dispositif selon la revendication 2,
**caractérisé en ce que**
le dispositif d'entraînement (12) est fixé de manière pivotante sur la fixation (10) et entraîne un levier d'actionnement (11) qui lui est attribué qui est relié de manière rotative sur l'extrémité du bras rotatif (9).

4. Dispositif selon la revendication 2 ou 3,
**caractérisé en ce que**
le logement (1) est muni de cartouches de chauffage (8).

5. Dispositif selon la revendication 3,
**caractérisé en ce que**
le boulon rotatif (15), le bras rotatif (9) et/ou le levier d'actionnement (11) sont thermiquement découplés.

6. Dispositif selon la revendication 3 ou 5,
**caractérisé en ce que**
le bras rotatif (9) et/ou le levier d'actionnement (11) sont composés d'un matériau thermo-isolant.

7. Dispositif selon la revendication 3 ou 5 ou 6,
**caractérisé en ce que**
le bras rotatif (9) et/ou le levier d'actionnement (11) sont composés d'un matériau avec une conductibilité thermique plus faible.

8. Dispositif selon l'une des revendications 1 à 7,
**caractérisé en ce que**
le bras rotatif (9) est relié de manière séparable au boulon (2, 15) et que le boulon (2, 15) peut être démonté axialement du logement (1) après séparation du bras rotatif (9) à des fins de maintenance ou de changement.
